# EUROPÄISCHE PATENTSCHRIFT

(11) **EP 0 686 243 B1**
(45) Veröffentlichungstag und Bekanntmachung des Hinweises auf die Patenterteilung: **28.04.1999**
(21) Anmeldenummer: 95900052.2
(22) Anmeldetag: 31.10.1994
(51) Int. Cl.: F16L 5/02

(54) **MAUERDURCHFÜHRUNG**
WALL DUCT
TRAVERSEE DE MUR

(30) Priorität: 23.12.1993 DE 4344077
(43) Veröffentlichungstag der Anmeldung: 13.12.1995
(73) Patentinhaber: Burger-Armaturen GmbH, D-58239 Schwerte (DE)
(72) Erfinder: BURGER, Hermann-Heinz, D-58239 Schwerte (DE)
(74) Vertreter: Dörner, Lothar, Dipl.-Ing.
(86) Internationale Anmeldenummer: DE9401281
(87) Internationale Veröffentlichungsnummer: WO9517625

(56) Entgegenhaltungen:
- EP-A- 0 313 717
- WO-A-89/01586
- DE-A- 2 934 491
- DE-C- 3 700 473
- DE-U- 9 203 042
- US-A- 3 844 148

## Beschreibung

Die Erfindung betrifft eine Mauerdurchführung für ein Kunststoffrohr, die ein das Kunststoffrohr in einem Schutzrohr aus nichtrostendem Stahl zentrierendes Anschlußstück aus nichtrostendem Stahl, eine an dem Anschlußstück abstützbare und mit einem Verschraubungskörper verschraubbare Überwurfmutter, eine in dem Kunststoffrohr befestigte, mit einem an der Stirnseite des Kunststoffrohres anliegenden Flansch versehene Stützhülse, einen um das Kunststoffrohr gelegten, zwischen dem Flansch und der Stirnseite des Anschlußstücks gehaltenen Profildichtring, und einen Dichtungsring zwischen dem Verschraubungskörper und dem Anschlußstück aufweist.

An Mauerdurchführungen für Kunststoffrohre werden u.a. folgende Anforderungen gestellt: Auf der Gebäudeinnenseite darf das Kunststoffrohr nicht in Erscheinung treten; es muß also der Übergang von Kunststoff auf Metall so erfolgen, daß auf der Gebäudeinnenseite das Kunststoffrohr nicht sichtbar ist. Die Kunststoffrohr-Verschraubung der Mauerdurchführung muß auch bei Feuereinwirkung noch so weit dicht bleiben, daß die nach den DVGW-Richtlinien zugelassenen Leckgasmengen nicht überschritten werden. Die Verschraubungen für das Kunststoffrohr, auch für ein Rohr aus Polyäthylen, müssen zugfest sein; d.h. bei Bauarbeiten und Einsatz von Greifbaggern darf sich das ungewollt erfaßte und angehobene Kunststoffrohr nicht aus den Verschraubungen herausziehen lassen. Die Verschraubungen müssen für spätere Kontrollen, Wartungs- und Reparaturarbeiten zugänglich sein. Gewünscht ist außerdem, daß die Mauerdurchführung möglichst nicht nur für Gas-, sondern auch für Wasseranschlüsse verwendet werden kann, um eine rationelle Lagerhaltung zu ermöglichen. Schließlich soll die Mauerdurchführung so ausgestaltet sein, daß ihre Montage einfach und der Zeitaufwand für ihre Einbringung kurz ist.

Mauerdurchführungen der eingangs genannten Art sind bekannt (DE-A-29 34 491; DE-U-92 03 042). Bei den bekannten Mauerdurchführungen besteht das Schutzrohr aus nicht rostendem Stahl - sog. VA-Stahl -, um es auch in Versorgungsräumen mit aggresiven Böden verwenden zu können. Aus dem gleichen Grund besteht das Anschlußstück, manchmal aus nichtrostendem Stahl, in der Regel jedoch aus Messing. Auch die Überwurfmutter, die Stützhülse und der Verschraubungskörper bestehen aus Messing; der Dichtungsring aus herkömmlichen Dichtungsmaterial, z.B. aus Nitrilkautschuk, Handelsname Perbunan. Eine solche Mauerdurchführung erfüllt hinsichtlich der mechanischen Belastbarkeit alle Anforderungen. Hinsichtlich der Dichtwirkung bei Feuereinwirkung ist sie jedoch verbesserungsbedürftig. Die aus DE-C- 37 00 473 bekannte Mauerdurchführung weist aus diesem Grund ein thermisch gesteuertes Sicherheits-Absperrventil mit einem Temperaturfühler auf, das koaxial zu dem Kunststoffrohr vorgesehen ist. Eine solche Mauerdurchführung ist jedoch zu aufwendig.

Hier will die Erfindung Abhilfe schaffen. Der Erfindung liegt die Aufgabe zugrunde, eine Mauerdurchführung der vorgenannten Art so auszubilden, daß bei einfacher konstruktiver Ausgestaltung und unter Beibehaltung der mechanischen Belastbarkeit die thermische Belastbarkeit verbessert wird. Gemäß der Erfindung wird diese Aufgabe dadurch gelöst, daß außer dem Schutzrohr und dem Anschlußstück die Überwurfmutter, die Stützhülse und der Verschraubungskörper aus nichtrostendem Stahl - sog. VA-Stahl - hergestellt sind und als Dichtungsring zwischen dem Verschraubungskörper und dem Anschlußstück ein Graphitring mit einer Dichte von 98 % bei 1,2 g/ccm verwendet ist.

Das bei der Erfindung für die genannten Durchführungsteile verwendete Material ist - im Vergleich zu dem bisher verwendeten Material, insbesondere Messing - hoch hitzebeständig. Dazu sind durch die Verwendung eines einzigen Materials für den Schraubverschluß gleiche Potentialverhältnisse hergestellt. Der als Abdichtung zwischen dem Verschraubungskörper und dem Anschlußstück vorgesehene Graphitring, der eine Dichte von 98 % bei 1,2 g/ccm aufweist, läßt sich in axialer Richtung verpressen und erlaubt das volle Anziehen der Überwurfmutter. Dadurch wird in einem Brandfall, bei dem in der Regel das Kunststoffrohr und die Profildichtung verbrennen, eine 100 %-ige Dichtheit erreicht. Gas strömt nur nach außen, nicht in den Kellerraum. Nach den Prüfgrundlagen VP 601 müssen alle Gasarmaturen für eine halbe Stunde bei einer thermischen Belastbarkeit von 650° C und 4 bar dicht bleiben. Diese Anforderung erfüllt die Mauerdurchführung nach der Erfindung.

In Weiterbildung der Erfindung ist auf der dem Kunststoffrohr abgewandten Seite des Verschraubungskörpers ein Absperrhahn in der Form eines Kugelventils vorgesehen, wie es an sich bekannt ist (EP-A-0313717).

Ausgestaltungen der Erfindung sind in weiteren Unteransprüchen beschrieben. Zwei Ausführungsbeispiele der Erfindung sind in der Zeichnung dargestellt und werden nachfolgend im einzelnen beschrieben. Es zeigen:
- Figur 1: in der rechten Hälfte in Ansicht, in der linken Hälfte im Axialschnitt eine Mauerdurchführung für ein Polyäthylen-Rohr (nachfolgend nach DIN abgekürzt nur PE-Rohr genannt), mit dem ein Verschraubungskörper verschraubt ist;
- Figur 2: in der linken Hälfte in Ansicht, in der rechten Hälfte im Axialschnitt eine andere Mauerdurchführung, die einen Absperrhahn aufweist.

Um Versorgungsleitungen von außen in das Innere eines Gebäudes einführen zu können, sind in seinen Mauern Durchbrüche vorzusehen. Bei Mauerdurchführungen der hier betrachteten Art wird in einen solchen Mauerdurchbruch ein Schutzrohr 1 eingemörtelt. Das Schutzrohr 1 besteht aus nichtrostendem Stahl, um es auch in Versorgungsräumen mit aggressiven Böden verwenden zu können. Das Schutzrohr 1 erhält auf seiner Außenfläche eine Aufrauhung durch Metallstrahlung und/oder Einkerbungen in bestimmten Abständen, um es sicher im Mauerwerk zu halten. In dem Schutzrohr 1 ist an einer Stirnseite ein Anschlußstück 2 befestigt, das auch als Adapter bezeichnet wird. Auch das Anschlußstück besteht aus nichtrostendem Stahl. Das Anschlußstück 2 steht zum überwiegenden Teil über das Schutzrohr 1 vor. Es ist mittels einer im Bereich der Stirnseite des Schutzrohres 1 umlaufenden Schweißnaht 11 an dem Schutzrohr 1 befestigt.

Das Anschlußstück 2 hat die Form einer Hülse. An seiner in das Schutzrohr 1 hineinragenden Stirnseite ist die Innenfläche 21 des Anschlußstücks 2 nach außen aufgeweitet. An seiner über das Schutzrohr 1 vorstehenden Stirnseite weist das Anschlußstück 2 außen einen Bund 23 auf. Auf der der Innenfläche 21 abgewandten Seite des Bunds 23 ist das Anschlußstück 2 in einem ringförmigen Ansatz 24 fortgesetzt. An dem Bund 23 stützt sich eine ihn hintergreifende Überwurfmutter 7 ab. Auch die Überwurfmutter 7 besteht aus nichtrostendem Stahl. Insbesondere bei größeren Nennweiten weist die Überwurfmutter 7 Aufnahmen 71 für einen Nasenschlüssel auf. Die der Angriffsfläche für die Überwurfmutter 7 gegenüberliegende Fläche dient als Anlagefläche 22 für einen Graphitring 8 mit einer Dichte von 98% bei 1.2g/ccm. Innen ist an dem Anschlußstück 2 eine weitere Anlagefläche 27 für einen Profildichtring 5 vorgesehen. Die Anlagefläche 27 weist von der von dem Ansatz 24 definierten Stirnseite einen geringeren Abstand auf als die Anlagefläche 22. Das Anschlußstück 2 ist ausgehend von der Anlagefläche 22 als Zylinderfläche, ausgehend von der Anlagefläche 27 als Kegelfläche ausgebildet. Es entsteht der spitz auslaufende, ringförmige Ansatz 24, dessen freies Ende von einer ebenen Stirnfläche gebildet ist.

Mittels des Anschlußstücks 2 ist ein PE-Rohr 3 an der einen Seite des Schutzrohres 1 abgedichtet gehalten. Auf der entgegengesetzten Seite erfolgt die Abdichtung mittels eines O-Rings 12 der zwischen Schutzrohr 1 und PE-Rohr 3 bei dessen Einziehen in das Schutzrohr 1 eingerollt wird. Der 0-Ring 12 schützt den Hohlraum zwischen Schutzrohr 1 und PE-Rohr 3 nach der Erdabdeckung gegen Verunreinigungen.

Das PE-Rohr 3 steht mit seiner einen Stirnseite über das Anschlußstück 2 vor. An dieser Stirnseite ist in das PE-Rohr 3 eine Stützhülse 4 eingebracht. Die Stützhülse besteht aus nichtrostendem Stahl. Sie liegt mit einem Flansch 41 an der Stirnseite des PE-Rohrs 3 an und überragt dessen Außenfläche. Der Flansch 41 ist zu diesem Zweck auf der dem PE-Rohr 3 zugewandten Seite als ebene Fläche 44 ausgebildet, die an dem PE-Rohr 3 und dem Profildichtring 5 anliegt. Im Anschluß an den Flansch 41 ist die Außenfläche der Stützhülse 4 mit sägezahnförmigen Ringnuten 42 versehen. Mit diesen Ringnuten 42 drückt die Stützhülse 4 innen gegen das PE-Rohr 3. Auf der den Ringnuten 42 abgewandten Seite liegt die Stützhülse 4 an der Innenwand eines Verschraubungskörpers 6 an. Auch der Verschraubungskörper 6 besteht aus nichtrostendem Stahl. Der nichtrostende Stahl ist in allen Fällen VA-Stahl der Werkstoff-Nr. 1.4301.

Die Stützhülse 4 ist axial über ihren Flansch 41 hinaus nach Art eines Hohlzapfens 43 verlängert. Auf der Seite der Verlängerung ist der Flansch 41 nach Art eines Kegelstumpfs 45 ausgebildet, der an dem dort ebenfalls als Kegelstumpf 65 ausgebildeten Verschraubungskörper 6 anliegt. Am freien Ende ist der als Verlängerung der Stützhülse 4 anzusehene Hohlzapfen 43 mit einem 0-Ring 46 versehen. In dem zwischen dem Flansch 41 der Stützhülse 4 und dem Ansatz 24 des Anschlußstücks 2 gebildeten Raum ist außen auf dem PE-Rohr 3 der Profildichtring 5 gehalten. Seine Ausgestaltung und Wirkungsweise sind im einzelnen in DE-A- 29 34 491 und DE-U-92 03 042 beschrieben.

Der Hohlzapfen 43 der Stützhülse 4, der Profildichtring 5 sowie die an dieser Stirnseite anschließenden Teile des PE-Rohrs 3 und des Anschlußstücks 2 sind von dem Verschraubungskörper 6 übergriffen. Der Verschraubungskörper 6 weist auf seiner dem Anschlußstück 2 zugewandten Seite an der Außenfläche ein Gewinde 61 für die Verschraubung mit der Überwurfmutter 7 auf. Zwischen der Stirnseite des Verschraubungskörpers 6 und dem Bund 23 des Anschlußstücks 2 ist der Graphitring 8 vorgesehen.

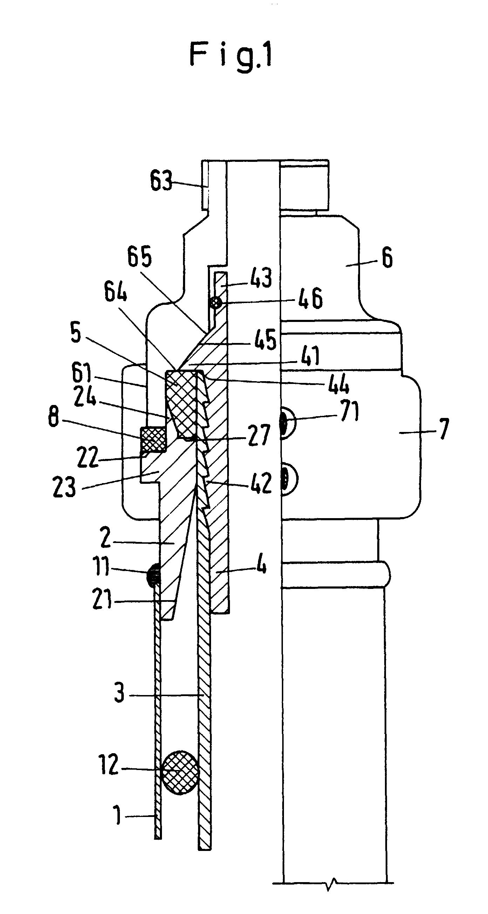

Bei der in Figur 1 dargestellten Mauerdurchführung verjüngt sich der Verschraubungskörper 2 außen unter Bildung von Absätzen zu einem Gewindestutzen 63, mit dessen Hilfe über nicht dargestellte Einrichtungen der Anschluß an die im Innern eines Gebäudes vorgesehenen Teile erfolgt. Innen ist an dem Verschraubungskörper 6 eine Schulter 64 angeformt, an der der Profildichtring 5 mit seiner äußeren Stirnfläche anliegt.

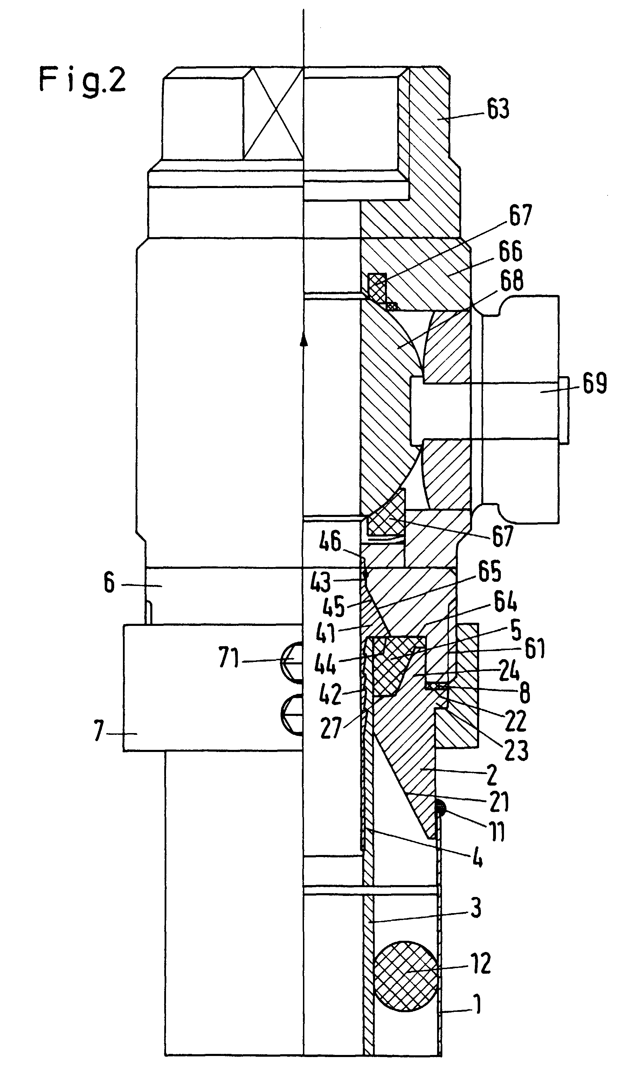

Bei der in Figur 2 dargestellten Ausführung ist zwischen dem Gewindestutzen 63 und dem Außengewinde 61 des Verschraubungskörpers 6 ein Absperrhahn in der Form eines Kugelventils 66 vorgesehen. Das Kugelventil 66 weist zwei Dichtungsringe 67 aus Graphit auf. Zwischen den Dichtungsringen 67 ist eine Kugel 68 schwenkbar gehalten. Die Schwenkbewegung der Kugel 68 wird über einen Bedienungsmehrkant 69 ausgelöst. Ausgestaltung und Wirkungsweise des Kugelventils 68 sind in EP-A-0313717 beschrieben.

Nach Einführen der Stützhülse 4 in den Verschraubungskörper 6 bis zur Anlage an die Kegelfläche 65 bzw. die Schulter 64 ist die Stützhülse 4 und damit das PE-Rohr 3 mit dem Verschraubungskörper 6 zentriert. Durch Anziehen der Überwurfmutter 7 wird der Profildichtring 5 gegen die ihn umschließenden Flächen der anderen Teile gedrückt, außerdem der Graphitring 8 zwischen Anschlußstück 2 und Verschraubungskörper 6 gedrückt. Das Anschlußstück 2 bildet zusammen mit dem Verschraubungskörper 6 den Kammerabschluß für den Profildichtring 5. Durch die relativ lange Stützthülse 4 wird das Fließen des Materials an der Einspannstelle bei Zugbelastung verhindert. Die Rohrverschraubung ist so bemessen, daß sie sich bei der Montage vollständig festziehen läßt, wobei der Graphitring 8 in axialer Richtung verpreßbar ist. Die verwendeten Materialien - nichtrostender Stahl für Schutzrohr 1, Anschlußstück 2, Stützhülse 4 und Verschraubungskörper 6; Graphit für den Ring 8 - erhöhen die thermische Widerstandsfähigkeit der Mauerdurchführung.

## Patentansprüche

1. Mauerdurchführung für ein Kunststoffrohr (3), die ein das Kunststoffrohr in einem Schutzrohr (1) aus nichtrostendem Stahl zentrierendes Anschlußstück (2) aus nichtrostendem Stahl, eine an dem Anschlußstück abstützbare und mit einem Verschraubungskörper (6) verschraubbare Überwurfmutter (7), eine in dem Kunststoffrohr befestigte, mit einem an der Stirnseite des Kunststoffrohres anliegenden Flansch (41) versehene Stützhülse (4), einen um das Kunststoffrohr gelegten, zwischen dem Flansch und der Stirnseite des Anschlußstücks gehaltenen Profildichtring (5), und einen Dichtungsring zwischen dem Verschraubungskörper (6) und dem Anschlußstück (2) aufweist, dadurch gekennzeichnet, daß außer dem Schutzrohr (1) und dem Anschlußstück (2) auch die Überwurfmutter (7), die Stützhülse (4) und der Verschraubungskörper (6) aus nichtrostendem Stahl hergestellt sind und als Dichtungsring zwischen dem Verschraubungskörper (6) und dem Anschlußstück (2) ein Graphitring (8) mit einer Dichte von 98 % bei 1,2 g/ccm verwendet ist.

2. Mauerdurchführung nach Anspruch 1, dadurch gekennzeichnet, daß das Anschlußstück (2) mit dem Schutzrohr (1) verschweißt ist.

3. Mauerdurchführung nach Anspruch 1 oder 2, dadurch gekennzeichnet, daß der Flansch (41) der Stützhülse (4) auf der dem Kunststoffrohr (3) zugewandten Seite als ebene Fläche (44) ausgebildet ist, die an dem Kunststoffrohr (3) und dem Profildichtring (5) anliegt.

4. Mauerdurchführung nach Anspruch 3, dadurch gekennzeichnet, daß der Flansch (41) der Stützhülse (4) auf der abgewandten Seite nach Art eines Kegelstumpfs (45) ausgebildet ist, der an einer in dem Verschraubungskörper (6) vorgesehenen Kegelfläche (65) anliegt, und daß die Stützhülse (4) axial über ihren Flansch (41) hinaus nach Art eines Hohlzapfens (43) verlängert ist, der mit seiner Außenwand an der Innenwand des Verschraubungskörpers (6) anliegt.

5. Mauerdurchführung nach einem der Ansprüche 1 bis 4, dadurch gekennzeichnet, daß auf der dem Kunststoffrohr (3) abgewandten Seite des Verschraubungskörpers (6) ein Absperrhahn in der Form eines Kugelventils (66) vorgesehen ist.

6. Mauerdurchführung nach einem der Ansprüche 1 bis 5 dadurch gekennzeichnet, daß an dem Anschlußstück (2) die Anlagefläche (27) für den Profildichtring (5) von der zugeordneten Stirnseite einen geringeren Abstand aufweist als die Anlagefläche (22) für den Graphitring (8).

7. Mauerdurchführung nach einem der Ansprüche 1 bis 6, dadurch gekennzeichnet, daß die Außenfläche der Stützhülse (4) mit sägezahnförmigen Ringnuten (42) versehen ist, mit denen die Stützhülse (4) innen in das Kunststoffrohr (3) eingedrückt ist.

## Claims

1. Wall duct for a plastic pipe (3), comprising a fitting (2) made of stainless steel for centring the plastic pipe in a protective tube (1) made of stainless steel, a union nut (7) supportable on the fitting and screw-fastenable to a union body (6), a support sleeve (4) fastened in the plastic pipe and provided with a flange (41) which lies against the end face of the plastic pipe, a formed sealing ring (5) placed around the plastic pipe and held between the flange and the end face of the fitting, and a sealing ring between the union body (6) and the fitting (2), characterized in that, in addition to the protective tube (1) and the fitting (2), the union nut (7), the support sleeve (4) and the union body (6) are also made of stainless steel and, as a sealing ring between the union body (6) and the fitting (2), a graphite ring (8) having a density of 98% of 1.2 g/ccm is used.

2. Wall duct according to claim 1, characterized in that the fitting (2) is welded to the protective tube (1).

3. Wall duct according to claim 1 or 2, characterized in that the flange (41) of the support sleeve (4) at the side directed towards the plastic pipe (3) is designed as a flat surface (44), which lies against the plastic pipe (3) and the formed sealing ring (5).

4. Wall duct according to claim 3, characterized in that the flange (41) of the support sleeve (4) at the remote side is designed in the manner of a truncated cone (45), which lies against a conical surface (65) provided in the union body (6), and that the support sleeve (4) is extended axially beyond its flange (41) in the manner of a hollow pin (43), which lies with its outer wall against the inner wall of the union body (6).

5. Wall duct according to one of claims 1 to 4, characterized in that at the side of the union body (6) remote from the plastic pipe (3) a stop valve in the form of a ball valve (66) is provided.

6. Wall duct according to one of claims 1 to 5, characterized in that, on the fitting (2), the bearing surface (27) for the formed sealing ring (5) is at a smaller distance from the associated end face than the bearing surface (22) for the graphite ring (8).

7. Wall duct according to one of claims 1 to 6, characterized in that the outer surface of the support sleeve (4) is provided with saw-tooth annular grooves (42), with which the support sleeve (4) is pressed into the inside of the plastic pipe (3).

## Revendications

1. Traversée de mur pour un conduit de matière plastique (3), qui présente un raccord (2)en acier inoxydable, centrant le conduit de matière plastique dans un fourreau (1) en acier inoxydable, un écrou d'accouplement (7)qui peut s'appuyer sur le raccord et peut être vissé avec un corps de vissage (6), un manchon d'appui (4)fixé dans le conduit de matière plastique et muni d'une bride (41) qui s'applique sur le côté frontal du conduit de matière plastique, une bague d'étanchéité profilée (5)placée autour du conduit de matière plastique et maintenue entre la bride et le côté frontal du raccord, et une bague d'étanchéité entre le corps de vissage (6) et le raccord (2), caractérisée en ce que, outre le fourreau (1) et le raccord (2), l'écrou d'accouplement (7), le manchon d'appui (4) et le corps de vissage (6) sont également réalisés en acier inoxydable, et en ce qu'une bague de graphite (8), d'une masse volumique de 98 % pour 1,2 g/cm³, est utilisée comme bague d'étanchéité entre le corps de vissage (6) et le raccord (2).

2. Traversée de mur suivant la revendication 1, caractérisée en ce que le raccord (2) est soudé avec le fourreau (1).

3. Traversée de mur suivant l'une des revendications 1 et 2, caractérisée en ce que la bride (41) du manchon d'appui (4) est réalisée sous forme de surface plane (44), sur le côté tourné vers le conduit de matière plastique (3), qui s'applique sur le conduit de matière plastique (3) et sur la bague d'étanchéité profilée (5).

4. Traversée de mur suivant la revendication 3, caractérisée en ce que la bride (41) du manchon d'appui (4) est réalisée sur le côté opposé à la manière d'un tronc de cône (45), qui s'applique sur une surface conique (65) prévue dans le corps de vissage (6), et en ce que le manchon d'appui (4) est prolongé dans le sens axial, au-delà de sa bride (41), à la manière d'un tourillon creux (43) qui s'applique par sa paroi externe sur la paroi interne du corps de vissage (6).

5. Traversée de mur suivant l'une des revendications 1 à 4, caractérisée en ce qu'un robinet d'arrêt, en forme d'un clapet à bille (66), est prévu sur le côté du corps de vissage (6) opposé au conduit de matière plastique (3).

6. Traversée de mur suivant l'une des revendications 1 à 5, caractérisée en ce que, sur le raccord (2), la surface d'appui (27) pour la bague d'étanchéité profilée (5) présente par rapport au côté frontal associé une distance inférieure à celle de la surface d'appui (22) pour la bague de graphite (8).

7. Traversée de mur suivant l'une des revendications 1 à 6, caractérisée en ce que la surface externe du manchon d'appui (4) est munie de rainures annulaires (42) en dents de scie, par lesquelles le manchon d'appui (4) est pressé intérieurement dans le conduit de matière plastique (3).
